# EUROPÄISCHE PATENTSCHRIFT

(11) **EP 1 231 338 B1**
(45) Veröffentlichungstag und Bekanntmachung des Hinweises auf die Patenterteilung: **08.09.2004**
(21) Anmeldenummer: 02002752.0
(22) Anmeldetag: 07.02.2002
(51) Int. Cl.: E04F 19/08

(54) **Revisionsrahmen**
Inspection hatch frame
Cadre de regard

(30) Priorität: 08.02.2001 DE 20102187 U
(43) Veröffentlichungstag der Anmeldung: 14.08.2002
(73) Patentinhaber: Riegelhof & Gärtner oHG, 64331 Weiterstadt-Gräfenhausen (DE)
(72) Erfinder: Schrenk, Hans, 64319 Pfungstadt (DE)
(74) Vertreter: Wolff, Felix, Dr.

(56) Entgegenhaltungen:
- EP-A- 1 089 412
- EP-A- 1 098 049
- WO-A-00/65702
- DE-A- 19 614 951
- DE-A- 19 746 725
- DE-A- 19 835 631

## Beschreibung

Die Erfindung bezieht sich auf einen Rahmen mit metallischen Winkelprofilstücken zur Befestigung in einer rechteckigen Revisionsöffnung einer aus insbesondere mindestens einer Gipsbauplatte gebildeten Wand, wobei jeweils ein Schenkel der Winkelprofilstücke unter Bildung eines Spaltes parallel zur umlaufenden Wandungsfläche der Revisionsöffnung verläuft und der andere Schenkel der Winkelprofilstücke nach innen gerichtet und mit Abstand parallel zur Außenfläche der Wand zurückgesetzt ist.

Bei den unter der Oberfläche von Wänden, insbesondere von sogenannten Schachtwänden verlaufenden Elektro- oder Sanitärinstallationen ist es möglich, sogenannte Revisionsöffnungen vorzusehen, die es ermöglichen, die Elektro- oder Sanitärinstallationen für Reparatur-, Service- oder Umbauarbeiten zugänglich zu machen. Diese Revisionsöffnungen werden, um den Eindruck einer geschlossenen Wandoberfläche zu vermitteln, verschlossen. Dazu wird in der Wand zunächst eine Öffnung vorbereitet, in die ein Rahmen eingesetzt wird, der dann durch eine Revisionsklappe geschlossen werden kann. Dabei ist es erforderlich, daß der Revisionsrahmen so in der Revisionsöffnung befestigt wird, daß er einen sicheren Halt für die Revisionsklappe gewährleistet. Für diese Befestigung ist es bekannt, den Revisionsrahmen mit in die Wand einlaßbaren Ankern zu versehen, in die Öffnung einzusetzen und zunächst zu verkeilen. Sodann wird sowohl der Verankerungsbereich als auch der Spalt zwischen Wand und Rahmen mit handelsüblichem Brandschutzspachtel bündig verspachtelt. Eine andere Möglichkeit besteht darin, den ohne Anker in die Wand eingesetzten Rahmen mit der Wand zu verschrauben. Auch in diesem Fall wird der Spalt zwischen Wand und Rahmen mit handelsüblichem Brandschutzspachtel bündig verspachtelt. Die vorgenannten Arbeiten für das Einsetzen des Rahmens beziehungsweise Revisionsrahmens sind verhältnismäßig aufwendig und zeitraubend.

Aus dem Gebiet der Underputzdosen ist eine Spreizeinchtung aus Dokument DE 19835631 A bekannt.

Der Erfindung liegt nun die Aufgabe zugrunde, einen Rahmen metallischen Winkelprofilstücken zur Befestigung in einer rechteckigen Revisionsöffnung einer aus mindestens einer Gipsbauplatte gebildeten Wand zu schaffen, die es ermöglicht, den Rahmen ohne großen Aufwand und in verhältnismäßig kurzer Zeit in der Revisionsöffnung sicher zu befestigen.
Zur Lösung dieser Aufgabe wird gemäß der Erfindung vorgeschlagen, daß der gattungsgemäße Rahmen zumindest an zwei sich gegenüberliegenden Winkelprofilstücken jeweils mindestens eine U-förmige in den Spalt ragende Klammer besitzt, deren Steg parallel zum anderen Schenkel angeordnet ist, die zwischen ihren Schenkeln einen durch eine in den Steg eingesetzte Schraube bewegbaren Spannkeil aufnimmt und deren dem Rahmen abgewandter Schenkel krallenartig ausgebildet ist.

Der erfindungsgemäße Rahmen kann in kürzester Zeit in der rechteckigen Revisionsöffnung befestigt werden. Der erfindungsgemäße Rahmen ist einfach und preiswert herzustellen und ergibt einen sicheren Halt.

Weitere Merkmale des Rahmens gemäß der Erfindung sind in den Ansprüchen 2 bis 5 offenbart.

Die Erfindung im Rahmen der Ansprüche wird nachfolgend anhand eines in einer Zeichnung dargestellten Ausführungsbeispieles näher erläutert. Dabei zeigen
- Fig. 1: einen Schnitt durch eine Wand mit einer Revisionsöffnung und einem darin befestigten Rahmen und
- Fig. 2: eine Draufsicht auf eine in der Fig. 1 verwendete Klammer.

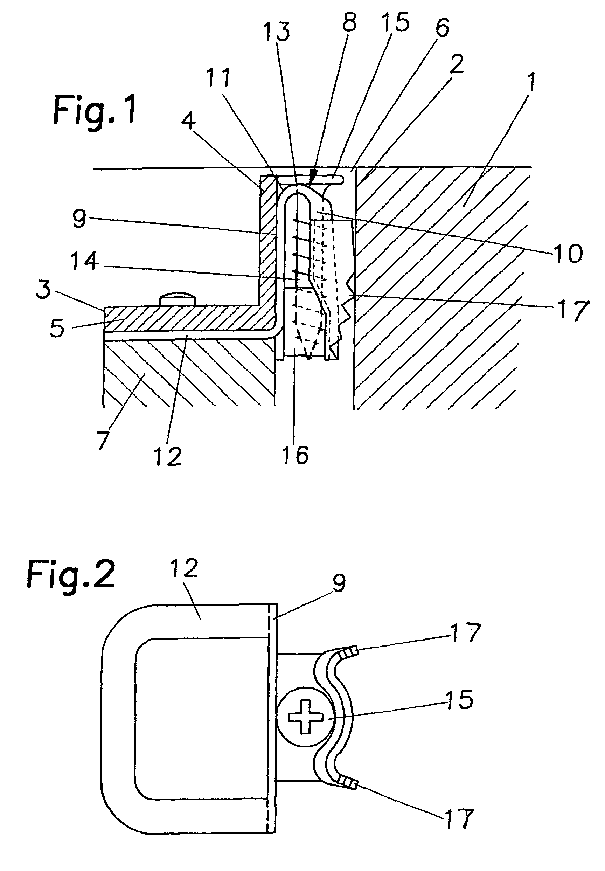

In der Fig. 1 der Zeichnung ist ausschnittsweise eine Wand 1 dargestellt, die aus Gipsplatten gebildet ist. Es können aber auch Gipskartonplatten sein. In diese Wand 1 ist eine Revisionsöffnung 2 eingearbeitet, die eine rechteckige Grundfläche ist. Die Revisionsöffnung 2 ist nun um ein vorgegebenes Maß allseitig größer als ein in die Revisionsöffnung 2 einzusetzender Rahmen 3 ausgebildet. Der Rahmen 3 ist zunächst aus Winkelprofilstücken, beispielsweise aus Aluminium, gebildet, die zwei rechtwinklig zueinander verlaufende Schenkel 4, 5 besitzen. Dabei verläuft der Schenkel 4 unter Bildung eines Spaltes 6 mit Abstand zur Wandungsfläche der Revisionsöffnung 2, während der andere Schenkel 5 nach innen gerichtet und mit Abstand parallel zur Außenfläche der Wand 1 zurückgesetzt ist. Im dargestellten Ausführungsbeispiel befindet sich an der Rückseite des Schenkels 5 des Rahmens 3 eine umlaufende, fest mit dem Rahmen 3 verbundene Gipsleiste 7. Dieser mit den Gipsleisten 7 versehene Rahmen 3 muß nun in der gezeichneten Lage in der Revisionsöffnung 2 gesichert werden.

Dazu ist der Rahmen 3 zumindest an zwei sich gegenüberliegenden Seiten der Winkelprofilstücke mit mindestens einer Klammer 8 bestückt. Vorteilhaft weist der Rahmen 3 an zwei sich gegenüberliegenden Seiten zwei derartige Klammern 8 auf. Jede Klammer 8 weist eine U-förmige Gestalt auf und besitzt somit zwei Schenkel 9, 10, die durch einen Steg 11 miteinander verbunden sind. Der Schenkel 9 ist eben ausgebildet und liegt an der äußeren Fläche des Schenkels 4 des Rahmens 3 an. An diesen Schenkel 9 der aus Federstahl geformten Klammer 8 schließt sich am freien Ende beziehungsweise nahe des freien Endes ein zusätzlicher Schenkel 12 an, der durch einen Stanzvorgang aus dem Schenkel 9 geformt ist und der die in der Fig. 2 erkennbare Gestalt aufweist. Über diesen Schenkel 12 ist die Klammer 8 zwischen dem Schenkel 5 des Rahmens 3 und der Gipsleiste 7 befestigt bzw. eingeklemmt.

Der andere Schenkel 10 der Klammer 8 ist krallenartig ausgebildet, wobei sich an der der Wandungsfläche der Revisionsöffnung 2 zugewandten Seite des Schenkels 10 mehrere spitzwinkelige Krallen 17 befinden. Die Krallenseite des Schenkels 10 weist für das Einsetzen des Rahmens 3 in die Revisionsöffnung 2 einen Abstand von der Wandungsfläche der Revisionsöffnung 2 auf.

In dem Steg 11 der Klammer 8 befindet sich eine Bohrung 13, in die eine Schraube 14 eingesteckt ist, deren Kopf 15 an der Außenseite des Schenkels 11 anliegt. Diese Schraube 14 nimmt nun an ihrem freien, mit einem mit Gewinde versehenen Ende einen Spannkeil 14 auf, der eine Bohrung mit Innengewinde besitzt und sich im Anfangsbereich zwischen den beiden Schenkeln 9, 10 der Klammer 8 befindet. Sobald nun der Rahmen 3 mit seinen Klammern 8 in die Revisionsöffnung 2 in der gezeichneten Lage eingesetzt wurde, werden die Schrauben 14 aller Klammern 8 so angezogen, daß sich die Spannkeile 16 der einzelnen Klammern 8 nach innen in Richtung auf den Steg 11 der Klammer 8 bewegen. Diese Bewegung der Spannkeile 16 hat zur Folge, daß sich der Schenkel 10 jeder Klammer 8 nach außen bewegt und sich an der Wandfläche der Revisionsöffnung 2 verkrallt. Sobald alle Schrauben 14 angezogen wurden, nimmt der Rahmen 3 eine sichere Lage in der Revisionsöffnung 2 ein. Über die Klammern 8 und die Schrauben 14 kann der Rahmen 3 auch in der Revisionsöffnung 2 in gewissen Grenzen ausgerichtet werden.

Sobald der Rahmen 3 die gezeichnete Lage in der Revisionsöffnung 2 eingenommen hat, wird der Spalt 6 zwischen der Wandfläche der Revisionsöffnung 2 und dem Rahmen 3 bzw. dessen Schenkeln 4 mittels einer handelsüblichen Brandschutzspachtelmasse zugespachtelt. Im Anschluß daran kann in den Rahmen 3 die übliche, als Brandschott ausgebildete Revisionsklappe eingesetzt werden. Falls erforderlich, wird anschließend über Haftmagnete noch eine abdeckende Verschlußplatte aufgebracht.

## Patentansprüche

1. Rahmen (3), insbesondere Revisionsrahmen, zur Befestigung in einer rechteckigen Revisionsöffnung einer aus insbesondere mindestens einer Gipsbauplatte gebildeten Wand, wobei der Rahmen metallische Winkelprofilstücke aufweist, wobei jeweils ein Schenkel der Winkelprofilstücke vorgesehen ist, unter Bildung eines Spaltes parallel zur umlaufenden Wandungsfläche der Revisionsöffnung zu verlaufen, und wobei der andere Schenkel (5) der Winkelprofilstücke nach innen gerichtet und vorgesehen ist, mit Abstand parallel zur Außenfläche der Wand zurückgesetzt zu sein, **dadurch gekennzeichnet, dass** der Rahmen (3) zumindest an zwei sich gegenüberliegenden Winkelprofilstücken jeweils mindestens eine U-förmige in den Spalt (6) ragende Klammer (8) aufweist, deren Steg (11) parallel zum anderen Schenkel (5) angeordnet ist, die zwischen ihren Schenkeln (9,10) einen durch eine in den Steg (11) eingesetzte Schraube (14) bewegbaren Spannkeil (16) aufnimmt und deren dem Rahmen (3) abgewandter Schenkel (10) krallenartig ausgebildet ist.

2. Rahmen (3) nach Anspruch 1, **dadurch gekennzeichnet, dass** die Klammer (8) aus Federstahl gebildet ist.

3. Rahmen (3) nach Anspruch 1 oder 2, **dadurch gekennzeichnet, dass** die Klammer (8) über eine Schraube mit dem Rahmen (3) verbunden ist.

4. Rahmen (3) nach mindestens einem der Ansprüche 1 bis 3, bei der der Rahmen an seinem parallel zur Außenfläche der Wand verlaufenden Schenkel mit einer Gipsleiste verbunden ist, **dadurch gekennzeichnet, dass** die Klammer (8) mit einem zusätzlichen Schenkel (12) zwischen dem Rahmen (3) und der Gipsleiste (7) klemmend befestigt ist.

5. Rahmen (3) nach mindestens einem der Ansprüche 1 bis 4, **dadurch gekennzeichnet, dass** die Schraube (14) gegenüber der Außenfläche der Wand (2) um einen vorgegebenen Betrag zurückgesetzt ist.

## Claims

1. Frame (3), in particular inspection hatch frame, for fastening in a rectangular inspection hatch of a wall formed from, in particular, at least one plaster board, the frame having metallic angle profile pieces, in each case one leg of the angle profile pieces being provided so as to run parallel to the peripheral wall surface of the inspection hatch, at the same time forming a gap, and the other leg (5) of the angled profiled pieces being directed inwards and being provided for being set back with a clearance parallel to the outer surface of the wall, **characterized in that** the frame (3) has, at least on each of two angled profiled pieces located opposite one another, at least one U-shaped clip (8) which projects into the gap (6) and the web (11) of which is arranged parallel to the other leg (5) and which receives between its legs (9, 10) a clamping wedge (16) moveable by means of a screw (14) inserted into the web (11) and of which the leg (10) facing away from the frame (3) is of claw-like design.

2. Frame (3) according to Claim 1, **characterized in that** the clip (8) is formed from spring steel.

3. Frame (3) according to Claim 1 or 2, **characterized in that** the clip (8) is connected to the frame (3) via a screw.

4. Frame (3) according to at least one of claims 1 to 3, in which the frame, at its leg running parallel to the outer surface of the wall, is connected to a plaster batten, **characterized in that** the clip (8) is fastened with an additional leg (12) between the frame (3) and the plaster batten (7) in a clamping manner.

5. Frame (3) according to at least one of claims 1 to 4, **characterized in that** the screw (14) is set back by a predetermined amount with respect to the outer surface of the wall (2).

## Revendications

1. Cadre (3), en particulier cadre de regard, destiné à être fixé dans une ouverture de regard rectangulaire d'une paroi formée en particulier au moins par une plaque de construction en plâtre, le cadre présentant des pièces profilées angulaires métalliques, à chaque fois une branche des pièces profilées angulaires étant prévue pour s'étendre en formant une fente parallèlement à la face de la paroi périphérique de l'ouverture de regard, et l'autre branche (5) des pièces profilées angulaires étant orientée vers l'intérieur et étant prévue pour être mise en retrait à une certaine distance parallèlement à la face extérieure de la paroi, **caractérisé en ce que** le cadre (3) présente au moins au niveau de deux pièces profilées angulaires opposées à chaque fois au moins une pince (8) en forme de U pénétrant dans la fente (6), dont l'âme (11) est disposée parallèlement à l'autre branche (5) et qui reçoit entre ses branches (9, 10) une clavette de serrage (16) pouvant être déplacée par une vis (14) insérée dans l'âme (11) et dont la branche (10) opposée au cadre (3) est réalisée en forme de crampon.

2. Cadre (3) selon la revendication 1, **caractérisé en ce que** la pince (8) est formée en acier à ressort.

3. Cadre (3) selon la revendication 1 ou 2, **caractérisé en ce que** la pince (8) est connectée au cadre (3) par le biais d'une vis.

4. Cadre (3) selon au moins l'une quelconque des revendications 1 à 3, dans lequel le cadre est connecté au niveau de sa branche s'étendant parallèlement à la face extérieure de la paroi à une corniche de plâtre, **caractérisé en ce que** la pince (8) est fixée avec une branche supplémentaire (12) entre le cadre (3) et la corniche de plâtre (7).

5. Cadre (3) selon au moins l'une quelconque des revendications 1 à 4, **caractérisé en ce que** la vis (14) est en retrait d'une valeur prédéfinie par rapport à la face extérieure de la paroi (2).
